# EUROPEAN PATENT APPLICATION

(11) **EP 4 243 163 A1**
(43) Date of publication of application: **13.09.2023**
(21) Application number: 22212531.2
(22) Date of filing: 09.12.2022
(51) Int. Cl.: H01M 50/103, H01M 50/342, H01M 10/647, H01M 10/04, H01M 10/52, H01M 50/176, H01M 50/548, H01M 50/169

(54) **SECONDARY BATTERY**

(30) Priority: 05.01.2022 KR 20220001465
(71) Applicant: Samsung SDI Co., Ltd., Yongin-si, Gyeonggi-do 17084 (KR)
(72) Inventor: Lee, Hyun Soo, 17084 Yongin-si, Gyeonggi-do (KR)
(74) Representative: Gulde & Partner

(57) **Abstract**

A secondary battery includes: an electrode assembly including a first electrode plate, a second electrode plate, and a separator between the first electrode plate and the second electrode plate; a can accommodating the electrode assembly, the can being formed by bending a plate-shaped member into a pipe shape and welding edges facing each other; a first side plate sealing an open end of the can; a second side plate sealing another open end of the can; a first side terminal electrically connected to the first electrode plate and exposed to the outside through the first side plate; a second side terminal electrically connected to the second electrode plate and exposed to the outside through the second side plate; and a safety vent on one side of the can opposite to a side at where the edges facing each other are welded.

## Description

### BACKGROUND

### 1. Field

Aspects of embodiments of the present disclosure relate to a secondary battery.

### 2. Description of the Related Art

A secondary battery is a rechargeable and dischargeable battery, different from a primary battery that is not designed to be charged (or recharged). A low-capacity secondary battery including only a single cell packaged in the form of a pack may be used for various portable small-sized electronic devices, such as cellular phones or camcorders, while a high-capacity secondary battery in which several tens of cells are connected to each other in a battery pack is widely used as a power source for motor driving, such as those in hybrid vehicles or electric vehicles. Secondary batteries may be classified as a cylindrical battery, a prismatic battery, a pouch-type (or polymer-type) battery, and the like, according to their external appearance. As one example, the prismatic battery may be formed by accommodating an electrode assembly formed with a separator interposed between a positive electrode plate and a negative electrode plate in a can with an electrolyte and installing a cap plate in (or on) the can.

The above information disclosed in this Background section is for enhancement of understanding of the background of the present disclosure, and therefore, it may contain information that does not constitute prior art.

### SUMMARY

Embodiments of the present disclosure provides a secondary battery that can be easily manufactured.

A secondary battery, according to an embodiment of the present disclosure, includes: an electrode assembly including a first electrode plate, a second electrode plate, and a separator between the first electrode plate and the second electrode plate; a can accommodating the electrode assembly, the can being formed by bending a plate-shaped member into a pipe shape and welding edges facing each other; a first side plate sealing an open end of the can; a second side plate sealing another open end of the can; a first side terminal electrically connected to the first electrode plate and exposed to the outside through the first side plate; a second side terminal electrically connected to the second electrode plate and exposed to the outside through the second side plate; and a safety vent on one side of the can opposite to a side at where the edges facing each other are welded. The can may include upper and lower surfaces of the battery. The can may have a square pipe shape with two larger sides and two smaller sides, and edges of the plate-shaped member are welded together at one of two smaller sides.

The safety vent may be above a hole in other one of the two smaller sides.

A periphery of the hole in the can may be recessed to accommodate the safety vent over the hole.

A height at which the periphery of the hole in the can is recessed may be equal to or greater than an overall thickness of the safety vent.

A thickness around the hole in the can may be equal to or greater than the thickness of a periphery of the safety vent.

The safety vent may be integrally formed with the can.

The safety vent may be convexly formed between a central portion and the edge of the safety vent.

A method of manufacturing a secondary battery, according to an embodiment of the present disclosure, includes: forming a can by bending a plate-shaped member into a pipe shape and welding edges facing each other; forming a safety vent on one side of the can opposite to a side at where the edges facing each other are welded; inserting an electrode assembly including a first electrode plate, a second electrode plate, and a separator between the first electrode plate and the second electrode plate in the can; sealing a first open end of the can with a first side plate; and sealing a second open end of the can with a second side plate. A first side terminal is electrically connected to the first electrode plate and exposed to the outside through the first side plate, and a second side terminal electrically connected to the second electrode plate and exposed to the outside through the second side plate.

The bending of the plate-shaped member may include: bending the plate-shaped member along a first straight line spaced apart by a distance from one side edge of the plate-shaped member; bending the plate-shaped member along a second straight line spaced apart by the distance from an opposite side edge of the plate-shaped member; bending the plate-shaped member along a third straight line spaced apart by the distance toward the one side edge from a center line between the one side edge and the opposite side edge; and bending the plate-shaped member a fourth straight line spaced apart by the distance from the center line toward the opposite side edge, respectively.

The welding of the edges facing each other may include welding the one side edge and the opposite side edge to each other to form a square pipe shape.

The method may further include: forming a hole in the plate-shaped member; and inserting a safety vent above the hole.

The method may further include fixing the safety vent to can by lap welding.

The method may further include recessing a periphery of the hole in the can before the inserting the safety vent.

### BRIEF DESCRIPTION OF DRAWINGS

FIG. 1 is a perspective view of a secondary battery according to an embodiment of the present disclosure.
FIG. 2 is a front view of the secondary battery.
FIG. 3 is a plan view of the secondary battery.
FIG. 4 is a bottom view of the secondary battery.
FIG. 5 is a left side view of the secondary battery.
FIG. 6 is a right side view of the secondary battery.
FIG. 7 is a perspective view of a can of a secondary battery according to an embodiment of the present disclosure.
FIG. 8 is a cross-sectional view taken along the line 8-8 in FIG. 7.
FIGS. 9 to 12 are schematic views of some steps of a process for manufacturing a can of a secondary battery according to an embodiment of the present disclosure.
FIG. 13 is a perspective view of a can of a secondary battery according to another embodiment of the present disclosure.

### DETAILED DESCRIPTION

Hereinafter, embodiments of the present disclosure will be described, in detail, with reference to the accompanying drawings.

Example embodiments of the present disclosure are provided to more completely explain the present disclosure to those skilled in the art, and the embodiments described herein may be modified in various other forms as would be understood by one of ordinary skill in the art. In other words, the present disclosure may be embodied in many different forms and should not be construed as being limited to the embodiments set forth herein. Rather, these example embodiments are provided so that this disclosure will be thorough and complete and will convey the aspects and features of the present disclosure to those skilled in the art.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of," when preceding a list of elements, modify the entire list of elements and do not modify the individual elements of the list. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

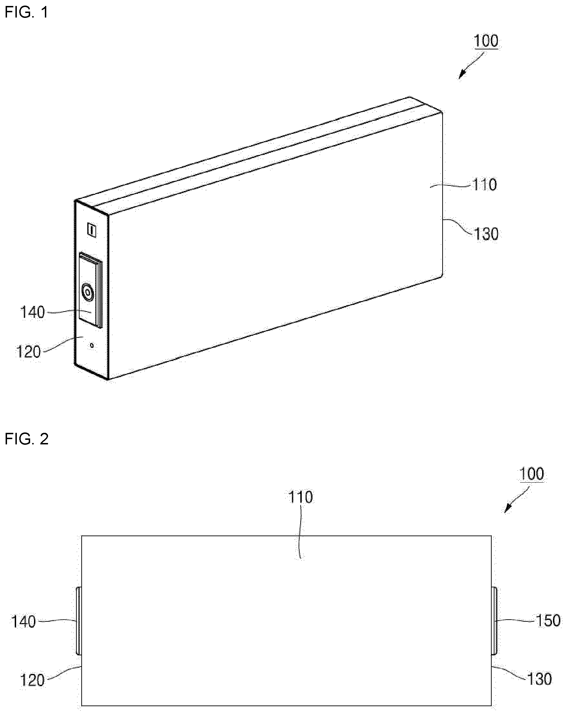

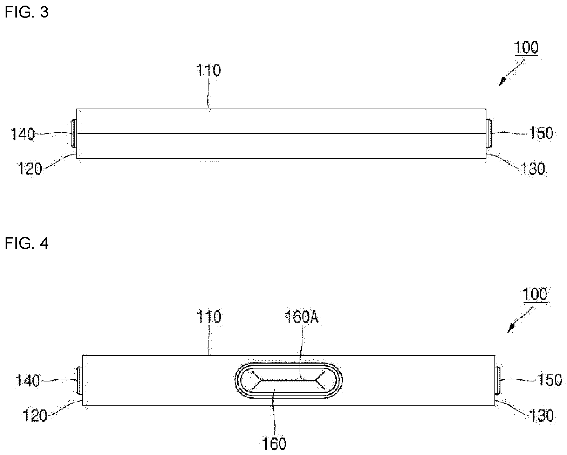

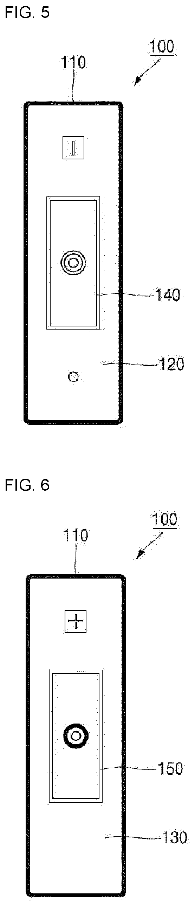

FIG. 1 is a perspective view of a secondary battery 100 according to an embodiment of the present disclosure, FIG. 2 is a front view of the secondary battery 100, FIG. 3 is a plan view of the secondary battery 100, FIG. 4 is a bottom view of the secondary battery 100, FIG. 5 is a left side view of the secondary battery 100, and FIG. 6 is a right side view of the secondary battery 100.

Referring to FIGS. 1 to 6, the secondary battery 100 according to an embodiment of the present disclosure includes an electrode assembly, a can 110, a first side plate 120, a second side plate 130, a first side terminal 140, and a second side terminal 150. Because the electrode assembly is disposed (or arranged or accommodated) inside the can 110, it is not shown in the drawings.

The electrode assembly includes a first electrode plate, a second electrode plate, and a separator.

The first electrode plate may be any one of a negative electrode plate and a positive electrode plate. For example, when the first electrode plate is a negative electrode plate, the first electrode plate includes a negative electrode coated portion that is coated with a negative electrode active material on a negative electrode current collector plate made of a conductive metal plate, such as a copper or nickel foil or mesh, and a negative electrode uncoated portion that a portion of the negative electrode current collector plate that is not coated with a negative electrode active material. The negative electrode active material may include, for example, a carbon-based material, Si, Sn, tin oxide, a tin alloy composite, a transition metal oxide, lithium metal nitride, or a metal oxide.

The second electrode plate may be the other one of the negative electrode plate and the positive electrode plate. For example, when the second electrode plate is a positive electrode plate, the second electrode plate may include may include a positive electrode coated portion that is coated with a positive electrode active material on a positive electrode current collector plate made of a conductive metal plate, for example, aluminum foil or mesh, and a positive electrode uncoated portion that is a portion of the positive electrode current collector plate that is not coated with a positive electrode active material. The positive electrode active material may include a chalcogenide compound, for example, a complex metal oxide, such as LiCoO₂, LiMn₂O₄, LiNiO₂, or LiNiMnO₂.

The separator is interposed between the first electrode plate and the second electrode plate and prevents an electrical short between the first electrode plate and the second electrode plate. The separator may be made of, for example, polyethylene, polypropylene, a porous copolymer of polyethylene and polypropylene, or the like.

The can 110 accommodates the electrode assembly and an electrolyte therein.

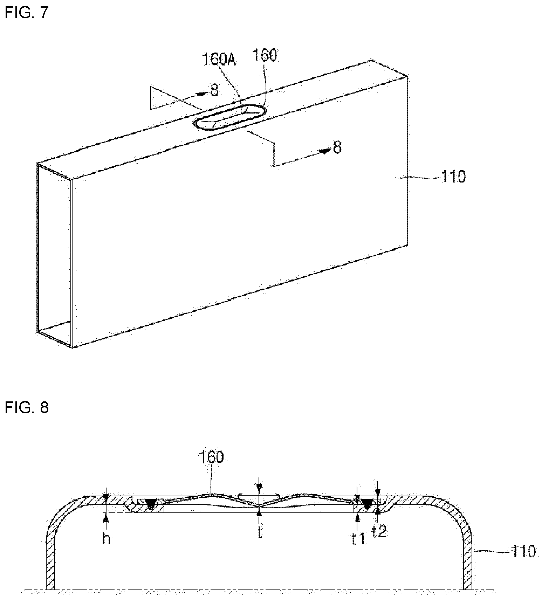

Referring to FIG. 7, which is a perspective view of the can 110 of the secondary battery 100 according to an embodiment of the present disclosure (for reference, the top and bottom are reversed when compared with FIG. 1), the can 110 has a structure in which a plate-shaped member is bent into a pipe shape (e.g., a rectangular pipe shape) and edges thereof facing each other are welded so that a space is provided therein and both ends are open.

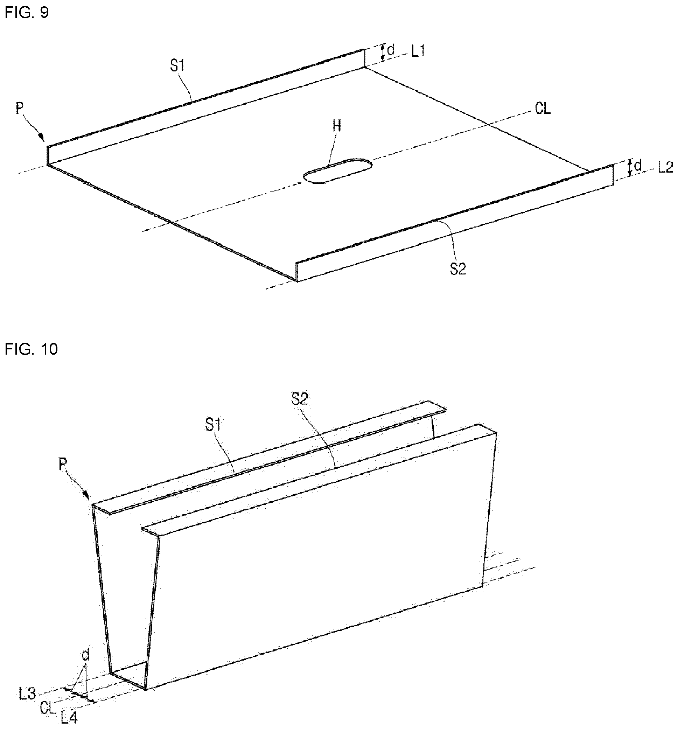

With respect to the manufacturing method of the can 110, referring to FIGS. 9 to 12, which are schematic diagrams of steps of a process for manufacturing the can 110 of the secondary battery 100 according to an embodiment of the present disclosure, first, a square-plate shaped member P is prepared, and a hole (or opening) H for arranging a safety vent 160 is processed in (or formed in) a central portion thereof (see, e.g., FIG. 9). In the drawing, the hole H is shown as being processed (or formed) on a center line CL of the plate-shaped member P.

In such an embodiment, the plate-shaped member P is bent upwardly by about 90° along an imaginary straight line L1 spaced apart by a distance d from one edge S1 of the plate-shaped member P and is bent upwardly by about 90° along an imaginary straight line L2 spaced apart by the distance d from the opposite side edge S2 (see, e.g., FIG. 9).

Then, the plate-shaped member P is bent upwardly by about 90° along an imaginary straight line L3 spaced apart by the distance d from the hole H toward the edge S1 of one side of the plate-shaped member P and is is bent upwardly by about 90° along an imaginary straight line L4 spaced the distance d from the hole H toward the opposite edge S2 of the plate-shaped member P (see, e.g., FIG. 10).

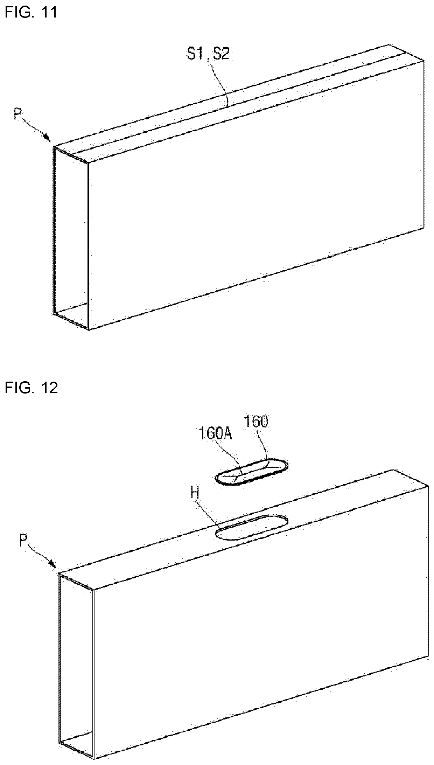

Next, the one side edge S1 and the opposite side edge S2 of the plate-shaped member P are welded together forming, as a whole, a square pipe shape (see, e.g., FIG. 11).

The safety vent 160 is installed on (or in) the hole H, thereby finishing the can 110 (see, e.g., FIG. 12).

When gas is generated inside the can 110, the safety vent 160 bursts when the pressure inside the can 110 reaches a certain level to release the gas and reduce the pressure, thereby preventing the secondary battery 100 from exploding. The safety vent 160 may be formed with a notch 160A to induce bursting.

The safety vent 160 may be fixed (e.g., may be fixed to the can 110) by lap welding.

Referring to FIG. 8, which is a cross-sectional view taken along the line 8-8 in FIG. 7, to allow the safety vent 160 to be stably seated on (or in) the hole H, the periphery of the hole H in the can 110 may be recessed. The recessed height h is equal to or greater than the overall thickness t (e.g., the maximum thickness) of the safety vent 160. Accordingly, the safety vent 160 may not protrude to the outside of the can 110 (e.g., may not protrude above an adjacent surface of the can 110 to provide a flat or substantially flat outer surface).

In addition, the thickness of the can 110 is equal to or greater than the thickness of the safety vent 160 at a region where the can 110 and the safety vent 160 overlap each other. In other words, the thickness t1 around the hole H in the can 110 may be equal to or greater than the thickness t2 of the edge of the safety vent 160. The increased rigidity due to a relatively larger thickness may prevent unintentional deformation of the periphery of the hole H in the can 110 during the lap welding process.

In addition, as shown in FIG. 8, the safety vent 160 may be convexly formed between the central portion and the edge.

The first side plate 120 has a square-plate shape to correspond to an open end of the can 110. The first side plate 120 is welded to the one end of the can 110 and seals that end of the can 110.

The second side plate 130 has a square-plate shape to correspond to the other open end of the can 110. The second side plate 130 is welded to the other end of the can 110 and seals that end of can 110.

The first side terminal 140 is electrically connected to the uncoated portion (e.g., the negative electrode uncoated portion) of the first electrode plate of the electrode assembly, passes through the first side plate 120, and is exposed to the outside. Accordingly, the first side terminal 140 act as a negative electrode terminal. An insulating member may be provided between the first side terminal 140 and the first side plate 120 to prevent an electrical short therebetween.

The second side terminal 150 is electrically connected to an uncoated portion of the second electrode plate (e.g., the positive electrode uncoated portion) of the electrode assembly, penetrates the second side plate 130, and is exposed to the outside. Accordingly, the second side terminal 150 acts as a positive electrode terminal. An insulating member may be provided between the second side terminal 150 and the second side plate 130 to prevent an electrical short therebetween.

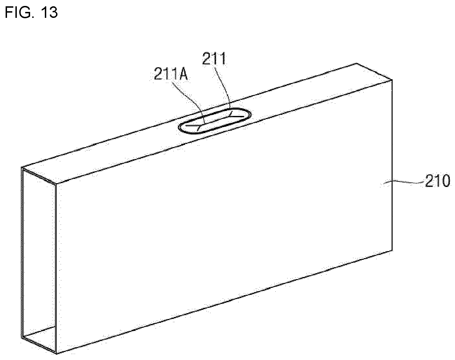

FIG. 13 is a perspective view of a can 210 of a secondary battery according to another embodiment of the present disclosure.

The secondary battery according to another embodiment of the present disclosure includes an electrode assembly, the can 210, a first side plate, a second side plate, a first side terminal, and a second side terminal. The electrode assembly, the first side plate, the second side plate, the first side terminal, and the second side terminal of the secondary battery may be substantially the same as the electrode assembly, the first side plate 120, the second side plate 130, the first side terminal 140, and the second side terminal 150 of the secondary battery described above, and thus, repetitive descriptions thereof will be omitted. The following description will primarily focus on the can 210.

Referring to FIG. 13, the can 210 of the secondary battery is similar to the can 110 of the secondary battery 100 in that a plate-shaped member is bent into a pipe shape and the opposite edges are welded, thereby providing a space inside and having a structure in which both ends are open. However, the can 210 differs from the can 110 in that the can 210 is integrally formed with a safety vent 211.

For example, the can 210 is formed to a relatively small thickness at a center of a square-plate shaped member to integrally form the safety vent 211 having the notch 211A, and the square-plate shaped member is bent and then welded in a substantially similar manner as described with respect to FIGS. 9 to 11.

In the above-described secondary battery, because the can includes upper and lower surfaces of the battery and a negative electrode terminal (e.g., a first side terminal) and a positive electrode terminal (e.g., a second side terminal) are provided on the left and right sides of the battery, the upper and lower portions thereof can be effectively cooled. In a conventional prismatic battery, because a negative electrode terminal and a positive electrode terminal are provided on the upper portion thereof, it is difficult to cool the upper portion.

In addition, in a conventional prismatic battery, because a negative electrode terminal and a positive electrode terminal are provided on the upper portion, there is a limitation in utilizing the upper space. However, in the secondary battery according to embodiments of the present disclosure, because a negative electrode terminal (e.g., a first side terminal) and a positive electrode terminal (e.g., a second side terminal) are provided on the left and right sides, the upper space can be efficiently used.

In addition, in a conventional prismatic battery, because a negative electrode terminal and a positive electrode terminal are provided on the upper portion, charge/discharge current flows in an approximate U-shape and, thus, there may be a problem in that a specific area (e.g., a specific portion of the electrode assembly) is rapidly deteriorated. However, in the above-described secondary battery, because a negative electrode terminal (e.g., a first side terminal) and a positive electrode terminal (e.g., a second side terminal) are provided on the left and right sides, charge/discharge current flows in the horizontal direction, thereby reducing battery deterioration.

As described above, embodiments of the present disclosure provide a secondary battery that can be easily manufactured by manufacturing a can by bending a square-plate shaped member into a square pipe shape.

The foregoing embodiments are only some embodiments for carrying out the secondary battery according to the present disclosure, which is not limited to the described embodiments. Thus, it will be understood by a person skilled in the art that various changes in form and details may be made therein without departing from the scope of the present disclosure as defined by the following claims and their equivalents.

## Claims

1. A secondary battery (100) comprising:
an electrode assembly comprising a first electrode plate, a second electrode plate, and a separator between the first electrode plate and the second electrode plate;
a can (110, 210) accommodating the electrode assembly, the can (110, 210) being formed by bending a plate-shaped member (P) into a pipe shape and welding edges (S1, S2) of plate-shaped member (P) facing each other;
a first side plate (120) sealing an open end of the can (110, 210);
a second side plate (130) sealing another open end of the can (110, 210);
a first side terminal (140) electrically connected to the first electrode plate and exposed to the outside through the first side plate (120);
a second side terminal (150) electrically connected to the second electrode plate and exposed to the outside through the second side plate (130); and
a safety vent (160, 211) on one side of the can (110, 210) opposite to a side at where the edges facing each other are welded.

2. The secondary battery (100) of claim 1, wherein the can (110, 210) has a square pipe shape with two larger sides and two smaller sides, and
wherein the secondary battery is formed such that edges of the plate-shaped member (P) are welded together at one of two smaller sides.

3. The secondary battery (100) of claim 2, wherein the safety vent (160, 211) is on a hole (H) in other one of the two smaller sides.

4. The secondary battery (100) of claim 3, wherein a periphery of the hole of the can (110, 210) is recessed to accommodate the safety vent (160, 211) on the hole (H).

5. The secondary battery (100) of claim 4, wherein a height (h) at which the periphery of the hole of the can (110, 210) is recessed is equal to or greater than an overall thickness of the safety vent (160, 211).

6. The secondary battery (100) of any of claims 3 to 5, wherein a thickness (t1) of the can (110, 210) around the hole (H) is equal to or greater than the thickness of a periphery of the safety vent (160, 211).

7. The secondary battery (100) of any of the preceding claims, wherein the safety vent (211) is integrally formed with the can (210).

8. The secondary battery (100) of any of the preceding claims, wherein the safety vent (160, 211) is convexly formed between a central portion and the edge of the safety vent (160, 211).

9. A method of manufacturing a secondary battery (100), the method comprising:
forming a can (110, 210) by bending a plate-shaped member (P) into a pipe shape and welding edges facing each other;
forming a safety vent (160, 211) on one side of the can (110, 210) opposite to a side at where the edges facing each other are welded;
inserting an electrode assembly comprising a first electrode plate, a second electrode plate, and a separator between the first electrode plate and the second electrode plate in the can (110, 210);
sealing a first open end of the can (110, 210) with a first side plate (120); and
sealing a second open end of the can (110, 210) with a second side plate (130),
wherein a first side terminal (140) is electrically connected to the first electrode plate and exposed to the outside through the first side plate (120), and
wherein a second side terminal (150) electrically connected to the second electrode plate and exposed to the outside through the second side plate (130).

10. The method of claim 9, wherein the bending of the plate-shaped member (P) comprises:
bending the plate-shaped member (P) along a first straight line (8-8) spaced apart by a distance from one side edge of the plate-shaped member;
bending the plate-shaped member along a second straight line (8-8) spaced apart by the distance from an opposite side edge of the plate-shaped member;
bending the plate-shaped member along a third straight line (8-8) spaced apart by the distance toward the one side edge from a center line (8-8) between the one side edge and the opposite side edge; and
bending the plate-shaped member a fourth straight line (8-8) spaced apart by the distance from the center line (8-8) toward the opposite side edge, respectively.

11. The method of claim 9 or 10, wherein the welding of the edges facing each other comprises welding the one side edge and the opposite side edge to each other to form a square pipe shape.

12. The method of any of claims 9 to 11, further comprising:
forming a hole (H) in the plate-shaped member (P); and
inserting a safety vent (160) into the hole.

13. The method of any of claims 9 to 12, further comprising fixing the safety vent (160) to can (110) by lap welding.

14. The method of claim 12, further comprising recessing a periphery of the hole of the can (110) before the inserting the safety vent (160).
